(19) Europäisches Patentamt
European Patent Office
Office européen des brevets

(11) **EP 1 999 684 B1**

(12) **FASCICULE DE BREVET EUROPEEN**

(45) Date de publication et mention
de la délivrance du brevet:
**22.02.2012 Bulletin 2012/08**

(51) Int Cl.:
***G06K 9/00*** (2006.01)

(21) Numéro de dépôt: **07731161.1**

(22) Date de dépôt: **20.03.2007**

(86) Numéro de dépôt international:
**PCT/FR2007/000471**

(87) Numéro de publication internationale:
**WO 2007/110498 (04.10.2007 Gazette 2007/40)**

(54) **TRAITEMENT DE DONNEES BIOMETRIQUES DANS UN REFERENTIEL MULTI DIMENSIONNEL**

VERARBEITUNG BIOMETRISCHER DATEN IN EINEM MEHRDIMENSIONALEN REPOSITORY

PROCESSING BIOMETRIC DATA UN A MULTIDIMENSIONAL REPOSITORY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **29.03.2006 FR 0602724**

(43) Date de publication de la demande:
**10.12.2008 Bulletin 2008/50**

(73) Titulaire: **MORPHO**
**75015 Paris (FR)**

(72) Inventeurs:
• **BRINGER, Julien**
**75015 Paris (FR)**
• **CHABANNE, Hervé**
**75015 Paris (FR)**
• **COTTARD, Martin**
**75015 Paris (FR)**

(74) Mandataire: **Cabinet Plasseraud**
**52, rue de la Victoire**
**75440 Paris Cedex 09 (FR)**

(56) Documents cités:
**US-B1- 6 330 345**

• **FENG HAO ET AL: "COMBINING CRYPTOGRAPHY WITH BIOMETRICS EFFECTIVELY" TECHNICAL REPORT - UNIVERSITY OF CAMBRIDGE. COMPUTER LABORATORY, XX, XX, vol. 28, no. 640, juillet 2005 (2005-07), pages 1-17, XP009072846 cité dans la demande**
• **HORTON M ET AL: "The costs and benefits of using complex 2-D gabor filters in a filter-based fingerprint-matching system" SYSTEM THEORY, 2002. PROCEEDINGS OF THE THIRTY-FOURTH SOUTHEASTERN SYMPOSIUM ON MARCH 18-19, 2002, PISCATAWAY, NJ, USA,IEEE, 18 mars 2002 (2002-03-18), pages 171-175, XP010599081 ISBN: 0-7803-7339-1**
• **BERROU C ET AL: "Near Shannon limit error-correcting coding and decoding: Turbo-codes. 1" PROCEEDINGS OF THE INTERNATIONAL CONFERENCE ON COMMUNICATIONS (ICC). GENEVA, MAY 23 - 26, 1993, NEW YORK, IEEE, US, vol. VOL. 3, 23 mai 1993 (1993-05-23), pages 1064-1070, XP010137024 ISBN: 0-7803-0950-2**

## Description

La présente invention concerne le traitement de données biométriques, et plus particulièrement la reconnaissance de données biométriques sur la base de données stockées en mémoire.

Certains systèmes de contrôle d'accès se fondent sur une analyse de caractéristiques biométriques d'une personne pour déterminer par exemple si cette dernière est autorisée à accéder à un lieu protégé. Une telle analyse de caractéristiques biométriques est également utilisée dans certains systèmes d'authentification ou d'identification qui visent à authentifier ou identifier une personne. Une telle analyse est classiquement basée sur une comparaison de données biométriques captées sur une personne en cours de contrôle, avec des données stockées dans une base de données.

Ainsi, par exemple, dans le cas des systèmes de contrôle d'accès, des données biométriques correspondant aux personnes pour lesquelles un accès est autorisé sont stockées dans une base de données. A l'issue d'une étape de comparaison de données captées sur une personne en cours de contrôle avec des données stockées, le système est en mesure de déterminer si cette personne fait partie de celles pour lesquelles un accès est autorisé.

Dans ce type de système biométrique, cette étape de comparaison est une étape capitale sur laquelle repose la fiabilité du système.

Le document 'A Fuzzy Commitment Scheme' de Juels et Wattenberg, 1999, propose de transformer cette étape de comparaison en un problème classique de décodage. Des données biométriques b1 préalablement stockées sont comparées à des données biométriques b2 captées sur une personne en cours de contrôle. A cet effet, ce document propose d'appliquer une opération de 'ou exclusif aux données biométriques b1 de ces données avec un mot d'un code correcteur d'erreur c. On obtient alors des données biométriques codées f. Puis, pour comparer les données biométriques captées b2 avec les données biométriques b1, on détermine si opération suivante est vérifiée :

$$f \oplus b2 = c \oplus e$$

dans laquelle e est une erreur présentant un poids inférieur à la capacité de correction du code.

Dans le cas où cette équation est vérifiée, on en déduit alors que les données biométriques b1 stockées et les données biométriques captées b2 se correspondent.

Le document 'Combining cryptography with biometrics effectively' de Hao Anderson et Daugman, 2005, propose d'appliquer ce principe général consistant à utiliser un code correcteur d'erreur dans une- étape de comparaison d'un système biométrique, dans le cas précis de données biométriques correspondant à un iris. Des données biométriques relatives à l'iris sont codées sur 256 octets formant ainsi un code d'iris. Au préalable, un code d'iris B est déterminé pour être utilisé en tant que donnée de référence. Une clé biométrique K est générée par un générateur de nombres aléatoires. Cette clé biométrique K est ensuite codée avec un code correcteur issu d'un code de Reed Solomon et d'un code de Hadamard pour fournir un pseudo code d'iris K'.

Puis, on applique l'opération de 'ou exclusif entre le pseudo code d'iris K' et le code d'iris B représentant la donnée de référence pour fournir un résultat R qui vérifie l'équation suivante :

$$R = B \oplus K'$$

On stocke alors le résultat R de cette dernière opération ainsi que la clé biométrique sous une forme hachée H(K).

Puis, lorsqu'une personne est en cours de contrôle, des données biométriques de son iris sont captées sous la forme d'un code d'iris capté B'.

On applique alors l'opération de 'ou exclusif entre le résultat stocké R et ce code d'iris capté B', pour obtenir le résultat R' suivant :

$$R' = B' \oplus R$$

Ensuite, le résultat R' est décodé sur la base du code correcteur utilisé précédemment pour coder la clé biométrique K afin de fournir une clé biométrique C.

Puis, on applique la même fonction de hachage à la clé biométrique C ainsi obtenue, et on compare la clé biométrique stockée sous sa forme hachée H(K) et la clé biométrique C sous sa forme hachée H(C).

Si l'équation suivante est vérifiée :

$$H(K) = H(C) \, ;$$

on en déduit que les données biométriques captées correspondent à la donnée de référence.

Des données biométriques sont ici représentées par un code d'iris ayant une taille limitée à 256 octets.

Ce code d'iris est obtenu par traitement d'une image d'iris. Or, une telle image peut présenter des caractéristiques différentes en fonction du contexte dans lequel elle a été captée, et notamment en fonction de l'exposition à la lumière de l'iris au moment de la capture de l'image ou encore en fonction du mouvement de la personne durant la capture de l'image d'iris.

Différents traitements permettent de lisser les différentes perturbations potentielles qui peuvent affecter une telle image.

Ainsi, par exemple, il est possible d'appliquer différents filtres de traitement d'images de façon à obtenir une pluralité de niveaux respectifs d'informations relativement à une même image, permettant ainsi- d'enrichir les informations relatives à l'iris que l'on traite.

Afin de lisser les perturbations de la capture d'image d'iris, il est également possible de réaliser une pluralité de captures d'image d'iris. Dans ce cas, on multiplie aussi les informations relatives à l'iris, et on obtient différents niveaux d'informations.

Chacun de ces niveaux d'informations pourrait alors correspondre, dans le contexte du document 'Combining cryptography with biometrics effectively', à un code d'iris codé sur 256 octets. Puis, pour traiter cette pluralité de niveaux d'informations, on pourrait être amené à appliquer successivement la méthode décrite dans le document précité, relativement aux différents niveau d'informations. De ce fait, l'étape de comparaison consisterait alors à comparer successivement les codes d'iris B avec des codes d'iris B', chacun étant issu de l'application d'un filtre d'une pluralité de filtres considérées, ou encore issu d'une capture d'image d'une- pluralité de captures d'image réalisées.

Une telle étape de comparaison correspondrait donc à une pluralité d'étapes de comparaison basée sur des données de 256 octets, présentant chacune un niveau de fiabilité limité.

La présente invention vise à améliorer le niveau de fiabilité d'une telle étape de comparaison.

Un objectif de la présente invention vise à accroître les performances d'un traitement de données biométriques basé sur une comparaison d'un premier ensemble de données biométriques avec un second ensemble de données biométriques pour déterminer si ces premier et second ensemble de données biométriques appartiennent à une même personne.

Plus précisément, il est proposé de réaliser l'étape de comparaison de données biométriques selon une méthode qui permet de traiter des données biométriques représentées dans un référentiel multi dimensionnel, de façon à prendre en compte, de manière simultanée, au cours d'une seule étape de comparaison, des données biométriques obtenues par une pluralité de traitements appliquée- relativement à la partie biométrique considérée, ces traitements pouvant être par exemple, des applications d'une pluralité de filtres, ou encore des captures d'image de cette partie biométrique. Ainsi, le niveau de fiabilité d'une telle étape de comparaison peut être amélioré.

Un premier aspect de la présente invention propose un procédé de traitement de données biométriques relatives à une partie biologique, dans un système biométrique disposant, d'une part, d'au moins un ensemble de données biométriques de référence résultant de l'application d'une opération 'ou exclusif' entre un premier ensemble de données biométriques et une première clé codée, et, d'autre part, d'une information relative à la première clé.

Le procédé comprend les étapes suivantes :

/a/ obtenir un second ensemble de données biométriques ;
/b/ déterminer une seconde clé codée en appliquant une opération 'ou exclusif' entre l'ensemble de données biométriques de référence et le second ensemble de données biométriques ;
/c/ décoder la seconde clé ; et
/d/ décider si le second ensemble de données biométriques correspond au premier ensemble de données biométriques en comparant l'information relative à la première clé avec la seconde clé.

Les premier et second ensembles de données biométriques sont exprimés dans un référentiel multi dimensionnel à N dimensions, N étant un nombre entier supérieur ou égal à 2, les données biométriques selon au moins une des N dimensions étant obtenues par application d'une pluralité de traitements appliquée relativement à la partie biologique.

En outre, la première clé codée est obtenue par application d'un codage transformant un mot initial d'une longueur déterminée en un mot codé dans le référentiel multi dimensionnel.

Grâce à ces dispositions, les données biométriques manipulées peuvent être exprimées dans un référentiel multi dimensionnel permettant ainsi avantageusement de prendre en compte une importante quantité d'informations relatives aux données biométriques- traitées et des ce fait permettant d'améliorer l'efficacité et la fiabilité de ce type de procédé de traitement biométrique.

En effet, plus la quantité d'informations pertinentes traitées simultanément est importante, plus le niveau de fiabilité, associé à la comparaison des données biométriques captées sur une personne en cours de contrôle avec des données biométriques initialement mémorisée, est élevé.

Aucune limitation n'est attachée au type de la pluralité de traitements appliquée relativement à la partie biométrique.

Comme les données sont manipulées dans un référentiel multi dimensionnel, il est ici possible de considérer de manière simultanée des données biométriques relatives à une image traitée, par exemple, selon un premier filtre et des données biométriques relatives à une image traitée selon au moins un second filtre, ces filtres étant des filtres de même type qui appartiennent à une même famille de filtres.

On peut également prévoir de traiter ici une pluralité de familles de filtres. Dans ce cas là, chaque famille de filtres supplémentaire peut induire alors une dimension supplémentaire dans le référentiel multi dimensionnel de dimension N.

Ainsi, dans un mode de réalisation de la présente invention, les données biométriques selon au moins une dimension sont obtenues en appliquant une pluralité de filtres à une image de la partie biométrique.

Il est aussi possible de considérer de manière simultanée des données biométriques issues de captures d'image différentes de la partie biométrique considérée.

Ainsi, dans un mode de réalisation de la présente invention, les données biométriques selon au moins une dimension sont obtenues en capturant une pluralité d'images de la partie biométrique.

Dans une variante, le référentiel multi dimensionnel considéré comprend au moins une dimension relative à la pluralité de captures d'image réalisée pour la partie biométrique considérée et au moins une autre dimension relative à l'application d'une pluralité de filtres appliquée à la pluralité d'images capturée.

On peut également prévoir avantageusement qu'au moins une dimension du référentiel multi dimensionnel selon un mode de réalisation de la présente invention correspond à des données biométriques obtenues en faisant varier au moins une caractéristique conditionnant le contexte de la capture d'image. Ainsi, une dimension peut correspondre, par capture d'image, à une pluralité de valeurs de luminosité, ou une pluralité de valeurs de contraste, ou encore à une variation de l'histogramme des niveaux de couleurs.

On peut aussi considérer des données biométriques selon au moins une dimension obtenues à partir d'une image captée, en faisant varier un seuil de quantification de l'écriture numérique de l'image captée.

Dans une variante, on peut prévoir de prendre en considération une combinaison de toutes ces pluralités de traitements, le nombre de dimensions du référentiel multi dimensionnel en dépendant directement.

Un tel procédé peut avantageusement être mis en oeuvre dans tout système biométrique qui est basé sur une étape de comparaison, entre des premières et secondes données biométriques, destinée à déterminer si ces premières et secondes données biométriques appartiennent à une même personne.

Dans un mode de réalisation de la présente invention, le référentiel multi dimensionnel comprend des données de longueur $n_i$ selon chacune des N dimensions du référentiel, i étant compris entre 1 et N. Le codage de la première clé peut alors comprendre les étapes suivantes :

- transformer la première clé dans un autre référentiel à N dimensions comprenant des données de longueur respective $k_i$ selon les N dimensions, le produit des longueurs $k_i$, pour i compris entre 1 et N, étant égal à la longueur déterminée de la première clé ;
- appliquer successivement selon les N dimensions respectivement N codes en bloc $C_i$, transformant les données de longueur respective $k_i$ en des données codées de longueur respective $n_i$.

L'information relative à la première clé peut être obtenue par application d'une fonction de hachage à la première clé. Dans ce cas, l'étape /d/ peut comprendre les étapes suivantes :

- appliquer la fonction de hachage à la seconde clé;
- comparer la seconde clé sous forme hachée avec l'information relative à la première clé.

Un deuxième aspect de la présente invention propose un dispositif de traitement de données biométriques relatives à une partie biologique dans un système biométrique, le dispositif de traitement disposant, d'une part, d'au moins un ensemble de données biométriques de référence résultant de l'application d'une opération 'ou exclusif entre un premier ensemble de données biométriques et une première clé codée et, d'autre part, d'une information relative à la première clé.

Le dispositif peut comprendre :

- une unité d'interface adaptée pour recevoir un second ensemble de données biométriques ;
- une unité de détermination adaptée pour fournir une seconde clé codée en appliquant une opération 'ou exclusif entre l'ensemble de données biométriques de référence et le second ensemble de données biométriques reçu par ladite unité d'interface ;

- une unité de décodage adaptée pour décoder la seconde clé codée ; et
- une unité de décision adaptée pour décider si le second ensemble de données biométriques correspond au premier ensemble de données biométriques en comparant l'information relative à la première clé avec la seconde clé.

Les premier et second ensembles de données biométriques peuvent être exprimés dans un référentiel multi dimensionnel à N dimensions, N étant un nombre entier supérieur ou égal à 2, les données biométriques selon au moins une desdites N dimensions étant obtenues par application d'une pluralité de traitements appliquée relativement à la partie biologique.

La première clé codée peut être obtenue par application d'un codage transformant un mot initial d'une longueur déterminée en un mot codé dans le référentiel multi dimensionnel.

Les données biométriques selon au moins une dimension peuvent être obtenues en capturant une pluralité d'images de la partie biologique.

Les données biométriques selon au moins une dimension peuvent aussi être obtenues en appliquant une pluralité de filtres à une image de la partie biologique.

L'information relative à la première clé peut être obtenue par application d'une fonction de hachage à la première clé; et l'unité de décision peut alors comprendre :

- une unité de hachage adaptée pour appliquer la fonction de hachage à la seconde clé décodée; et

- une unité de comparaison adaptée pour comparer l'information relative à la première clé et la seconde clé sous forme hachée.

L'ensemble de données biométriques de référence et/ou l'information relative à la première clé peuvent être disponibles dans une base de données.

Un troisième aspect de la présente invention propose un système de traitement de données biométriques comprenant un dispositif de traitement de données biométriques selon le deuxième aspect de la présenter invention et au moins un capteur biométrique adapté pour fournir un second ensemble de données biométriques audit dispositif de traitement de données biométriques.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre les principales étapes réalisées selon un mode de réalisation de la présente invention ;
- la figure 2 illustre une application d'un codage selon un mode de réalisation de la présente invention ; et
- la figure 3 illustre une application d'une famille de filtres à une empreinte de doigt;
- la figure 4 illustre un dispositif de traitement de données biométriques selon un mode de réalisation de la présente invention ; et
- la figure 5 illustre un système de traitement de données biométriques selon un mode de réalisation de la présente invention.

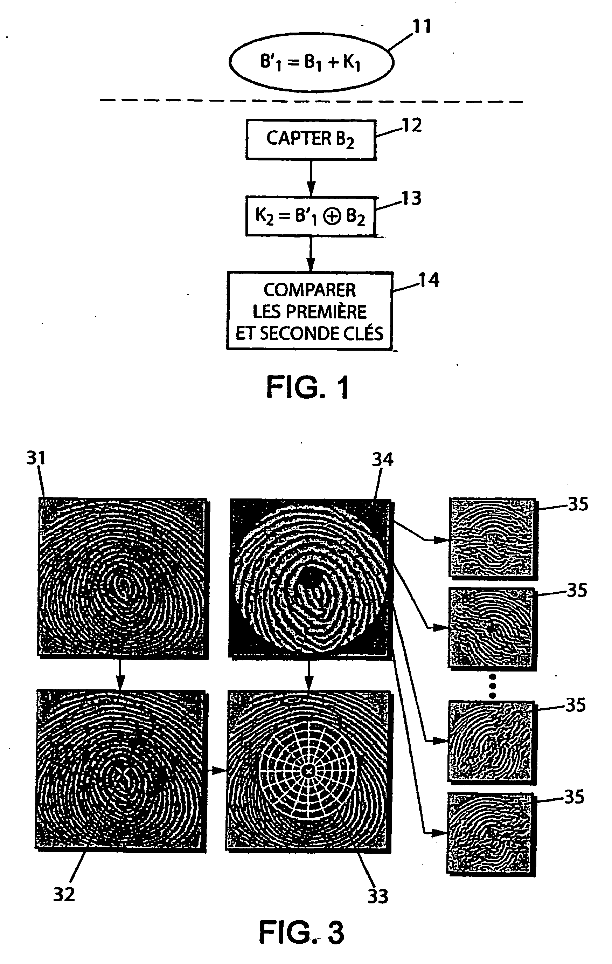

La figure 1 illustre les principales étapes réalisées selon un mode de réalisation de la présente invention.

Dans une étape d'initialisation 11, le système biométrique considéré dispose d'un ensemble de données biométriques de référence $B'_1$. Cet ensemble de données biométriques vérifie l'équation suivante :

$$B'_1 = B_1 + K_1$$

où $B_1$ correspond à un premier ensemble de données biométriques ;
et $K_1$ correspond à une première clé codée.

Le premier ensemble de données biométriques peut être obtenu dans une phase d'initialisation classique d'un système biométrique de ce type, au cours de laquelle sont captées des données biométriques correspondantes aux personnes considérées dans le système biométrique, c'est-à-dire les personnes pour lesquelles un accès est autorisé ou une identification est possible ou encore une authentification est possible.

Dans un mode de réalisation de la présente invention, ce premier ensemble de données biométriques peut être relatif à une partie biologique correspondant à une empreinte, ou encore à un iris. Les données biométriques captées correspondent dans ces exemples à une image en deux dimensions (2D). Ce premier ensemble de données biométriques peut aussi être relatif à un visage et correspondre alors soit à une image en 2D, soit encore à une image en trois dimensions (3D).

Dans le cas où un ensemble de données biométriques à traiter correspond à une image en 2D, et lorsque cette image est filtrée selon deux familles de filtres distinctes $f_j$ et $g_i$, alors les données biométriques correspondantes sont alors avantageusement manipulées et traitées selon un mode de réalisation de la présente invention, dans un référentiel à quatre dimensions.

Dans une variante, une seule famille de filtres est utilisée. Ici, les données biométriques sont alors avantageusement traitées dans un référentiel 3D.

Il est ensuite aisé de déduire des exemples énoncés ci-avant, un principe général qui est adapté à des données biométriques captées selon X dimensions et filtrée respectivement avec un nombre Y de familles de filtres d'image. Dans ce dernier cas, les données biométriques sont avantageusement traitées dans un référentiel à N dimensions, N vérifiant l'équation suivante :

$$N = X + Y$$

Quelque soit la partie biologique visée (iris, empreinte, visage), dans un mode de réalisation de la présente invention, l'image considérée est traitée selon au moins une famille de filtres adaptés pour la partie biologique visée. Une telle caractéristique permet d'améliorer les performances d'un tel système biométrique en augmentant le niveau de fiabilité de la prise de décision basée sur l'étape de comparaison de données biométriques selon un mode de réalisation de la présente invention.

Dans ce contexte, le premier ensemble de données biométriques $B_1$ correspond à des données disposées dans un référentiel multi dimensionnel dont au moins une des dimensions est relative à l'application d'une famille de filtre sur une image de la partie biologique visée.

Dans le cas où les données biométriques relatives à la partie biologique visée sont exprimées selon une dimension, sous la forme d'un mot de $n_1$ bits, $n_1$ étant un nombre entier, comme par exemple un code d'iris tel que décrit précédemment, on peut appliquer un procédé selon un mode de réalisation dans un référentiel à deux dimensions, une première dimension correspondant aux $n_1$ bits du mot codant la partie biologique visée et une seconde dimension correspondant à l'application d'une famille de filtres sur cette partie biologique visée.

Ici, un ensemble de données biométriques peut donc s'écrire sous la forme d'une matrice de $n_1$ colonnes

et de $n_2$ lignes, $n_2$ correspondant au nombre de filtres compris dans la famille de filtres appliqués à l'image de la partie biologique visée.

La première clé codée $K_1$, appliquée à cette étape 11, peut être avantageusement obtenue en générant en premier lieu une première clé de k bits de manière aléatoire et en appliquant un codage sur ces k bits qui est adapté pour passer depuis un référentiel défini sur une dimension et sur une longueur k audit référentiel multi dimensionnel.

Un code de la famille des 'Turbo Codes' peut être adapté à ce mode de réalisation. De tels codes sont décrits par exemple dans le document EP 827284 'Procédé de transmission de bits d'informations avec codage correcteur d'erreur, codeur et décodeur pour la mise en oeuvre de ce procédé'. Les sections suivantes décrivent un exemple d'application d'un tel Turbo Code dans un mode de réalisation de la présente invention appliqué à un référentiel à deux dimensions. Il est aisé d'en déduire une application à un référentiel multi dimensionnel à N dimensions, N étant un nombre quelconque supérieur à 2.

Plus précisément, les sections suivantes décrivent un exemple d'un Turbo Code Produit (TCP), basé sur un produit de deux codes C1 et C2 de paramètres respectivement $(n_1, k_1, d_1)$ et $(n_2, k_2, d_2)$, où $n_1$ (i compris entre 1 et 2) correspond à la longueur du code $C_i$, $k_i$ correspond au nombre de symboles d'information du code $C_i$ et $d_i$ correspond à la distance de Hamming minimale entre deux mots quelconques.

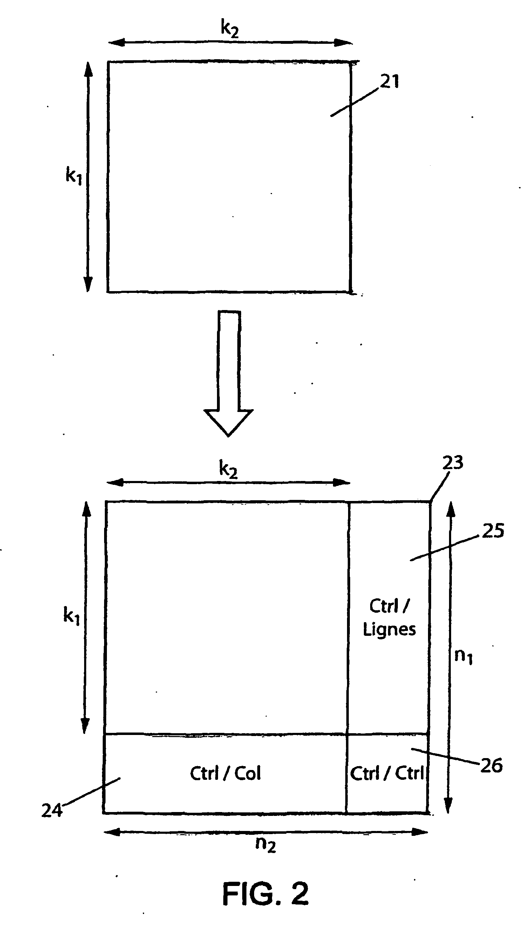

La figure 2 illustre l'application d'un tel Turbo Code à la clé de k bits pour obtenir la première clé codée $K_1$. La première clé de k bits est en premier lieu écrite sous la forme d'une matrice 21 comprenant $k_1$ lignes et $k_2$ colonnes d'éléments correspondant chacun à un bit de la première clé, $k_1$ et $k_2$ vérifiant l'équation suivante :

$$k_1 \times k_2 = k$$

Puis, les $k_1$ lignes sont chacune codées avec le code $C_2$, fournissant $k_1$ lignes de $n_2$ éléments. On obtient ainsi une matrice de $k_1 \times n_2$ élément. Ensuite, les $n_2$ colonnes de cette matrice sont codées avec le code $C_1$, fournissant $n_2$ colonnes de $n_1$ éléments. A l'issue de l'application du Turbo Code basé sur les codes en bloc $C_1$ et $C_2$, on obtient alors une matrice 23 de $n_1 \times n_2$ éléments. En général dans une telle matrice, une partie 24 comprend des éléments de contrôle sur les colonnes permettant de contrôler la validité des $k_1$ premiers éléments des $k_2$ premières colonnes de cette matrice 23. Cette dernière comprend également une partie 25 d'éléments de contrôle- sur les lignes permettant de contrôler la validité des $k_2$ premiers- éléments- des $k_1$ premières lignes de cette matrice, une partie 26 permettant de contrôler les éléments de contrôle sur les lignes et sur les colonnes des parties 25 et 24 respectivement.

Ainsi, en appliquant un tel codage à la clé de k bits, on obtient une clé codée $K_1$ de dimension $n_1 \times n_2$.

Dans de telles conditions, le système biométrique dispose d'un ensemble de données biométriques de référence qui résulte de l'application d'un 'ou exclusif entre le premier ensemble de données biométriques $B_1$ et la première clé codée $K_1$, $B_1$ et $K_1$ étant exprimés dans un même référentiel multi dimensionnel.

Le procédé selon un mode de réalisation de la présente invention consiste alors, dans une étape 12, à capter un second ensemble de données biométriques $B_2$, par exemple à partir d'une personne en cours de contrôle dans le système biométrique considéré.

Puis, à une étape 13, on obtient une seconde clé codée $K_2$ qui vérifie l'équation suivante :

$$K_2 = B'_1 \oplus B_2$$

Cette dernière équation peut s'écrire sous la forme suivante:

$$K_2 = B_1 \oplus B_2 \oplus K_1$$

Dans le cas où les deux ensembles de données biométriques $B_1$ et $B_2$ correspondent à une même partie biologique d'une même personne, les clés $K_1$ et $K_2$ doivent également se correspondre à une erreur près.

En décodant la seconde clé codée $K_2$, par application d'un décodage correspondant au codage appliquée à la première clé pour obtenir $K_1$, on obtient une seconde clé. Sur la base d'une comparaison entre la première clé et la seconde clé, on est alors en mesure de déterminer si les premier et second ensembles de données biométriques correspondent à une même personne.

Le décodage d'une donnée ainsi codée peut reposer sur un processus itératif qui consiste à effectuer un décodage des lignes suivi d'un décodage des colonnes. Un décodage de ce type peut par exemple être basé sur un algorithme de Viterbi, tel que décrit dans le document G. D. Fomey, "The Viterbi algorithm", Proc. IEEE, vol. 61, No 3, pp. 268-278, Mar. 1973. Un décodage de ce type peut également être similaire à celui mis en oeuvre dans un « turbo décodeur » comme proposé dans le document EP 827284. Dans le cas où les données d'entrée d'un tel décodeur sont en binaire, le décodage revient à trouver le mot de code à distance de Hamming minimale. Ce type de décodage itératif est bien connu de l'homme du métier et permet d'atteindre un niveau de performance élevé.

Un tel décodage consiste à effectuer itérativement un décodage des lignes et un décodage des colonnes.

Etant donné qu'une telle étape de comparaison est basée sur un traitement simultané d'une importante quantité d'informations qui comprennent notamment des données, issues- de l'application d'une pluralité de filtres sur une image de la partie biologique considérée, cette étape est efficace et hautement fiable.

L'application de filtres sur une partie biologique visée permet d'améliorer la résistance aux variations et/ou perturbations qui peuvent plus ou moins affecter les étapes de capture de données au cours d'un tel procédé.

Dans un mode de réalisation de la présente invention, un ensemble de données biométriques correspond à une capture de l'iris d'une personne selon une méthode telle que celle proposée dans le document J. Daugman, 'High confidence visual recognition of persons by a test of statistical independence', IEEE Trans. Pattern Anal. Mach. Intell. 15 (11) (1993) 1148-1161 et dans le document J. Daugman, "The importance of being random: statistical principles of iris recognition," Pattern Recognition, Vol. 36, No. 2, pp. 279-291, 2003.

Il convient de noter qu'un mode de réalisation de la présente invention peut s'appliquer aisément à toute autre partie biométrique que l'iris. Les sections décrivent un exemple de traitement d'image basé sur une application de filtres énoncée ici à titre illustratif uniquement.

Un iris est ici capté sous la forme d'une image infra rouge. Puis, cette image est filtrée selon une famille de filtres du type 2D -Gabor, tels que ceux définis par exemple dans le document J. G. Gaugman, "Complete discrete 2D Gabor transforms by neural networks for image analysis and compression-", IEEE Trans. Acoustics ; Speech Signal Processing 36 (1988).

L'image infra rouge est traitée suivant deux dimensions, par exemple suivant, d'une part, des cercles concentriques et, d'autre part; des rayons de ces cercles. Ainsi, dans de telles conditions, le référentiel utilisé pour les ensembles de données biométriques est un référentiel à trois dimensions, correspondant aux deux dimensions de traitement de l'image et à la dimension de la famille des filtres utilisés.

Dans une variante, lorsque la partie biologique visée correspond à des empreintes captées sous la forme d'une image 2D, on peut appliquer une méthode telle que celle proposée dans le document K. Jain, S. Prabhakar, and L. Hong, "A Multichannel Approach to Fingerprint Classification", IEEE Trans. Pattern Anal. and Machine Intell., Vol. 21, No. 4, pp. 348-359, 1999.

La figure 3 illustre une telle méthode. Une image d'empreinte 31 est captée. Puis, un point de référence 32 est localisé dans cette image. Ensuite, à partir de ce point de référence 32 l'image est divisée en une pluralité de secteurs angulaires. Puis, les secteurs ainsi définis sont normalisés; tel que cela est illustré par une image 34, avant qu'une famille de filtres soit appliquée respectivement selon des orientations différentes, tel que cela est illustré par des images 35.

L'image est ainsi traitée, d'une part, selon deux dimensions, et, d'autre part, selon une famille de filtres. Il en résulte, dans ce cas également, que les ensembles de données biométriques sont avantageusement traités dans un référentiel de 3 dimensions selon un mode de réalisation de la présente invention.

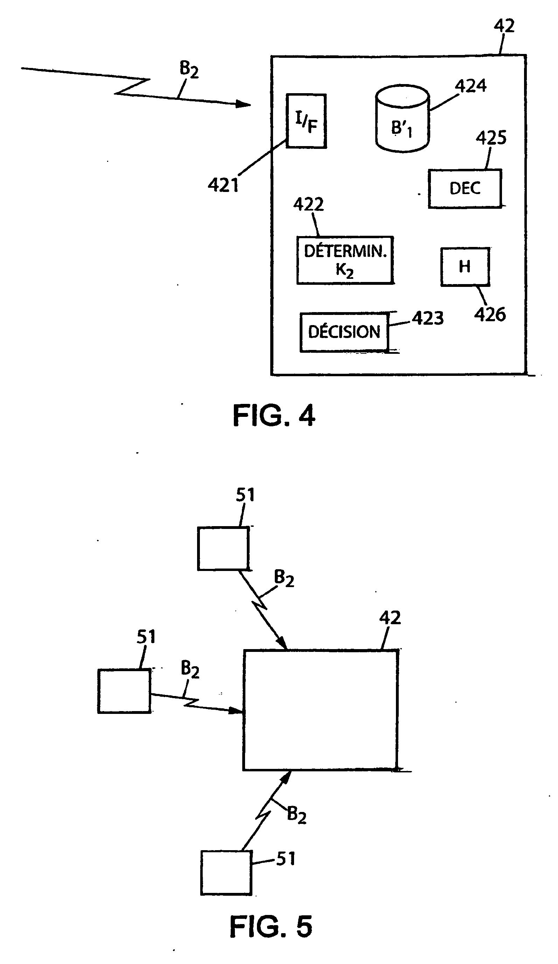

La figure 4 illustre un dispositif de traitement de données biométriques adapté pour mettre en oeuvre un mode de réalisation de la présente invention.

Un tel dispositif de traitement 42 comprend une unité d'interface 421 adaptée pour recevoir un second ensemble de données biométriques $B_2$. Ce second ensemble de données biométriques peut par exemple être transmis depuis un capteur biométrique du système considéré.

Ce dispositif de traitement 42 comprend en outre une unité de détermination 422 adaptée pour fournir une seconde clé codée $K_2$ en appliquant une opération 'ou exclusif entre l'ensemble de données biométriques de référence et un second ensemble de données biométriques reçu par l'unité d'interface 421.

Il comprend également une unité de décision 423 adaptée pour décider si le second ensemble de données biométriques $B_2$ correspond au premier ensemble de données biométriques $B_1$ en comparant l'information relative à la première clé avec la seconde clé.

Cette comparaison peut être réalisée sur des formes hachées des premières et secondes clés, ce qui permet de préserver la confidentialité de ces clés. En effet, dans ce contexte, la première clé est mémorisée uniquement sous une forme hachée.

Dans un mode de réalisation de la présente invention, l'unité de décision comprend en outre une unité de décodage 425 adaptée pour décoder la seconde clé codée $K_2$ par application d'un décodage itératif correspondant au codage utilisé pour obtenir la première clé $K_1$.

Elle peut comprendre en outre une unité de hachage 426 adaptée pour appliquer la fonction de hachage à la seconde clé décodée.

L'ensemble de données biométriques de référence $B'_1$ et/ou la première clé sous forme hachée peuvent être disponibles dans une base de données 424 gérée par le dispositif de traitement 42.

La figure 5 illustre un système de traitement de données biométriques comprenant un dispositif de traitement de données biométriques 42 et une pluralité de capteurs biométriques 51 adaptés pour fournir à ce dispositif 42 un second ensemble de données biométriques $B_2$.

**Revendications**

1. Procédé de traitement de données biométriques relatives à une partie biologique **caractérisé en ce que**, dans un système biométrique disposant, d'une part, d'au moins un ensemble de données biométriques de référence ($B'_1$) résultant de l'application d'une opération 'ou exclusif entre un premier ensem-

ble de données biométriques ($B_1$) et une première clé codée ($K_1$), et, d'autre part,
d'une information relative à la première clé,
ledit procédé comprend les étapes suivantes :

/a/ obtenir un second ensemble de données biométriques ($B_2$);
/b/ déterminer une seconde clé codée ($K_2$) en appliquant une opération 'ou exclusif entre l'ensemble de données biométriques de référence et le second ensemble de données biométriques ;
/c/ décoder ladite seconde clé; et
/d/ décider si le second ensemble de données biométriques correspond au premier ensemble de données biométriques en comparant l'information relative à la première clé avec la seconde clé ;

et **en ce que** lesdits premier et second ensembles de données biométriques sont exprimés dans un référentiel multi dimensionnel à N dimensions, N étant un nombre entier supérieur ou égal à 2, les données biométriques selon au moins une desdites N dimensions étant obtenues par une pluralité de traitements appliquée relativement à ladite partie biologique; et dans lequel ladite première clé codée est obtenue par application d'un codage transformant un mot initial d'une longueur déterminée en un mot codé dans ledit référentiel multi dimensionnel.

2. Procédé de traitement de données biométriques selon la revendication 1, dans lequel les données biométriques selon au moins une dimension sont obtenues en capturant une pluralité d'images de la partie biologique.

3. Procédé de traitement de données biométriques selon la revendication 1 ou 2, dans lequel les données biométriques selon au moins une dimension sont obtenues en appliquant une pluralité de filtres à une image de la partie biologique.

4. Procédé de traitement de données biométriques selon l'une quelconque des revendications 1 à 3, dans lequel un décodage itératif est mis en oeuvre pour réaliser l'étape /c/.

5. Procédé de traitement de données biométriques selon l'une quelconque des revendications précédentes, dans lequel le référentiel multi dimensionnel comprend des données de longueur $n_i$ selon chacune des N dimensions du référentiel, i étant compris entre 1 et N ; et
dans lequel le codage de la première clé comprend les étapes suivantes :

- transformer la première clé dans un autre référentiel à N dimensions comprenant des données de longueur respective $k_i$ selon les N dimensions, le produit des longueurs $k_i$, pour i compris entre 1 et N, étant égal à la longueur déterminée de la première clé ;
- appliquer successivement selon les N dimensions respectivement. N codes en bloc $C_i$, transformant les données de longueur respective $k_i$ en des données codées de longueur respective $n_i$.

6. Procédé de traitement de données biométriques selon l'une quelconque des revendications précédentes, dans lequel, l'information relative à la première clé est obtenue par application d'une fonction de hachage à la première clé; et
dans lequel, l'étape /d/ comprend les étapes suivantes :

- appliquer la fonction de hachage à la seconde clé ;
- comparer la seconde clé sous forme hachée avec l'information relative à la première dé.

7. Dispositif (42) de traitement de données biométriques relatives à une partie biologique dans un système biométrique **caractérisé en ce que** ledit dispositif de traitement dispose, d'une part, d'au moins un ensemble de données biométriques de référence ($B'_1$) résultant de l'application d'une opération 'ou exclusif entre un premier ensemble de données biométriques ($B_1$) et une première clé codée ($K_1$) et, d'autre part, d'une information relative à la première clé;
**en ce que** ledit dispositif comprend:

- une unité d'interface (421) adaptée pour recevoir un second ensemble de données biométriques ($B_2$) ;
- une unité de détermination (422) adaptée pour fournir une seconde clé codée ($K_2$) en appliquant une opération 'ou exclusif entre l'ensemble de données biométriques de référence et le second ensemble de données biométriques reçu par ladite unité d'interface ;
- une unité de décodage (425) adaptée pour décoder la seconde clé codée ($K_2$) ; et
- une unité de décision (423) adaptée pour décider si le second ensemble de données biométriques correspond au premier ensemble de données biométriques en comparant l'information relative à la première clé avec la seconde clé ;

et **caractérisé en ce que** lesdits premier et second ensembles de données biométriques sont exprimés dans un référentiel multi dimensionnel à N dimensions, N étant un nombre entier supérieur ou égal à 2, les données biométriques selon au moins une desdites N dimensions étant obtenues par une pluralité de traitements appliquée relativement à ladite partie biologique; et

dans lequel ladite première clé codée est obtenue par application d'un codage transformant un mot initial d'une longueur déterminée en un mot codé dans ledit référentiel multi dimensionnel.

**8.** Dispositif (42) de traitement de données biométriques selon la revendication 7, dans lequel les données biométriques selon au moins une dimension sont obtenues en capturant une pluralité d'images de la partie biologique.

**9.** Dispositif (42) de traitement de données biométriques selon la revendication 7 ou 8, dans lequel les données biométriques selon au moins une dimension sont obtenues en appliquant une pluralité de filtres à une image de la partie biologique.

**10.** Dispositif (42) de traitement de données biométriques selon l'une quelconque des revendications 7 à 9, dans lequel, l'information relative à la première clé est obtenue par application d'une fonction de hachage à la première clé ; et

dans lequel, l'unité de décision comprend :

- une unité de hachage (426) adaptée pour appliquer la fonction de hachage à la seconde clé décodée ; et
- une unité de comparaison adaptée pour comparer l'information relative à la première clé et la seconde clé sous forme hachée.

**11.** Dispositif. (42) de traitement de données biométriques (42) selon l'une quelconque des revendications 7 à 10, dans lequel l'ensemble de données biométriques de référence (B'$_1$) et/ou l'information relative à la première clé sont disponibles dans une base de données (424).

**12.** Système de traitement de données biométriques comprenant un dispositif de traitement de données biométriques selon l'une quelconque des revendications 7 à 11 et au moins un capteur biométrique (51) adapté pour fournir un second ensemble de données biométriques audit dispositif de traitement de données biométriques.

**Claims**

**1.** A method of processing biometric data relating to a biological part, **characterized in that**, in a biometric system having, on the one hand, at least one set of reference biometric data (B'$_1$) resulting from the application of an "exclusive or" operation between a first set of biometric data (B$_1$) and a first encoded key (K$_1$) and, on the other hand, a piece of information relating to the first key, said method comprises the following steps:

(a) obtaining a second set of biometric data (B$_2$);
(b) determining a second encoded key (K$_2$) by applying an "exclusive or" operation between the set of reference biometric data and the second set of biometric data;
(c) decoding said second key; and
(d) deciding whether the second set of biometric data corresponds to the first set of biometric data by comparing the information relating to the first key with the second key;

and **in that** said first and second sets of biometric data are expressed in a multidimensional coordinate system of N dimensions, N being an integer greater than or equal to 2, the biometric data along at least one of said N dimensions being obtained by a plurality of processes applied in relation to said biological part; and

in which said first encoded key is obtained by applying an encoding transforming an initial word of a predetermined length into a word coded in said multidimensional coordinate system.

**2.** The method of processing biometric data as claimed in claim 1, in which the biometric data along at least one dimension are obtained by capturing a plurality of images of the biological part.

**3.** The method of processing biometric data as claimed in claim 1 or 2, in which the biometric data along at least one dimension are obtained by applying a plurality of filters to an image of the biological part.

**4.** The method of processing biometric data as claimed in any one of claims 1 to 3, in which an iterative decoding is employed to carry out step (c).

**5.** The method of processing biometric data as claimed in any one of the preceding claims, in which the multidimensional coordinate system comprises data of length $n_i$ along each of the N dimensions of the coordinate system, i being between 1 and N; and

in which the encoding of the first key comprises the following steps:

- transforming the first key into another N-dimensional coordinate system comprising data of respective length $k_i$ along the N dimensions, the product of the lengths $k_i$, for i between 1 and N, being equal to the predetermined length of the first key; and
- successively applying N codes in block $C_i$ along the N dimensions respectively, transforming the data of respective length $k_i$ into coded data of respective length $n_i$.

6. The method of processing biometric data as claimed in any one of the preceding claims, in which the information relating to the first key is obtained by applying a hash function to the first key, and in which step (d) includes the following steps:

- applying the hash function to the second key; and
- comparing the second key in hashed form with the information relating to the first key.

7. A device (42) for processing biometric data relating to a biological part in a biometric system, **characterized in that** said processing device comprises, on the one hand, at least one set of reference biometric data ($B'_1$) resulting from the application of an "exclusive or" operation between a first set of biometric data ($B_1$) and a first encoded key ($K_1$) and, on the other hand, a piece of information relating to the first key;
**in that** said device comprises:

- an interface unit (421) designed to receive a second set of biometric data ($B_2$);
- a determination unit (422) designed to provide a second encoded key ($K_2$) by applying an "exclusive or" operation between the set of reference biometric data and the second set of biometric data received by said interface unit;
- a decoding unit (425) designed to decode the second encoded key ($K_2$); and
- a decision unit (423) designed to decide whether the second set of biometric data corresponds to the first set of biometric data by comparing the information relating to the first key with the second key;

and **in that** said first and second sets of biometric data are expressed in a multidimensional coordinate system of N dimensions, N being an integer greater than or equal to 2, the biometric data along at least one of said N dimensions being obtained by a plurality of processes applied in relation to said biological part; and
in which said first encoded key is obtained by applying an encoding transforming an initial word of a predetermined length into a word coded in said multidimensional coordinate system.

8. The biometric data processing device (42) as claimed in claim 7, in which the biometric data along at least one dimension are obtained by capturing a plurality of images of the biological part.

9. The biometric data processing device (42) as claimed in claim 7 or 8, in which the biometric data along at least one dimension are obtained by applying a plurality of filters to an image of the biological part.

10. The biometric data processing device (42) as claimed in any one of claims 7 to 9, in which the information relating to the first key may be obtained by applying a hash function to the first key; and in which the decision unit comprises:

- a hashing unit (426) designed to apply the hash function to the decoded second key; and
- a comparison unit designed to compare the information relating to the first key and the second key in hashed form.

11. The biometric data processing device (42) as claimed in any one of claims 7 to 10, in which the set of reference biometric data ($B'_1$) and/or the information relating to the first key are available in a database (424).

12. A system for processing biometric data comprising a biometric data processing device as claimed in any one of claims 7 to 11 and at least one biometric sensor (51) designed to provide a second set of biometric data to said biometric data processing device.

**Patentansprüche**

1. Verfahren zur Bearbeitung von biometrischen Daten bezogen auf einen biologischen Teil, **dadurch gekennzeichnet, dass**, in einem biometrischen System, das einerseits mindestens eine Einheit von biometrischen Referenzdaten ($B'_1$), die aus der Anwendung einer Operation "exklusives Oder" zwischen einer ersten Einheit von biometrischen Daten ($B_1$) und einem ersten kodierten Schlüssel ($K_1$) resultieren, und andererseits eine Information bezogen auf den ersten Schlüssel aufweist;
das Verfahren die folgenden Schritte aufweist:

/a/ Erlangen einer zweiten Einheit von biometrischen Daten ($B_2$);
/b/ Bestimmen eines zweiten kodierten Schlüssels ($K_2$) durch Anwendung einer Operation "exklusives Oder" zwischen der Einheit von biometrischen Referenzdaten und der zweiten Einheit von biometrischen Daten;
/c/ Dekodieren des zweiten Schlüssels; und
/d/ Entscheiden, ob die zweite Einheit von biometrischen Daten der ersten Einheit von biometrischen Daten entspricht, durch Vergleich der Information bezogen auf den ersten Schlüssel mit dem zweiten Schlüssel,

dass die erste und die zweite Einheit der biometrischen Daten in einem multidimensionalen Referentiell mit N Dimensionen beschrieben werden, wobei N eine ganze Zahl größer oder gleich 2 ist, und wobei die biometrischen Daten gemäß mindestens einer der N Dimensionen durch eine Vielzahl von Bearbeitungen, die bezogen auf den biologischen Teil angewandt wird, erhalten werden; und wobei der erste kodierte Schlüssel durch Anwendung einer Kodierung erhalten wird, die ein ursprüngliches Wort mit einer festgelegten Länge in ein kodiertes Wort in dem multidimensionalen Referentiell transformiert.

2. Verfahren zur Bearbeitung von biometrischen Daten nach dem Anspruch 1, **dadurch gekennzeichnet, dass** die biometrischen Daten gemäß mindestens einer Dimension durch Aufnahme einer Vielzahl von Bildern des biologischen Teils erhalten werden.

3. Verfahren zur Bearbeitung von biometrischen Daten nach dem Anspruch 1 oder 2, **dadurch gekennzeichnet, dass** die biometrischen Daten gemäß mindestens einer Dimension durch Anwendung einer Vielzahl von Filtern auf ein Bild des biologischen Teils erhalten werden.

4. Verfahren zur Bearbeitung von biometrischen Daten nach einem beliebigen der Ansprüche 1 bis 3, **dadurch gekennzeichnet, dass** eine iterative Dekodierung zum Umsetzen des Schrittes /c/ durchgeführt wird.

5. Verfahren zur Bearbeitung von biometrischen Daten nach einem beliebigen der vorhergehenden Ansprüche, **dadurch gekennzeichnet, dass** das multidimensionale Referentiell Längendaten $n_i$ gemäß jeder der N Dimensionen des Referentiells aufweist, wobei i zwischen 1 und N liegt; und dass die Kodierung des ersten Schlüssels die folgenden Schritte aufweist:

   - Transformation des ersten Schlüssels in ein anderes Referentiell mit N Dimensionen, das entsprechende Längendaten $k_i$ gemäß der N Dimensionen aufweist, wobei i zwischen 1 und N liegt, und wobei das Produkt der Längen $k_i$ genauso groß ist wie die festgelegte Länge des ersten Schlüssels
   - schrittweises Anwenden gemäß der N Dimensionen von jeweils N Blockcodes $C_i$ die die entsprechenden Längendaten $k_i$ in entsprechende kodierte Längendaten $n_i$ transformieren.

6. Verfahren zur Bearbeitung von biometrischen Daten nach einem beliebigen der vorhergehenden Ansprüche, **dadurch gekennzeichnet, dass** die Information bezogen auf den ersten Schlüssel durch Anwendung einer Hashfunktion auf den ersten Schlüssel erhalten wird; und dass der Schritt /d/ die folgenden Schritte aufweist:

   - Anwenden der Hashfunktion auf den zweiten Schlüssel;
   - Vergleichen des zweiten Schlüssels in zerhackter Form mit der Information bezogen auf den ersten Schlüssel.

7. Vorrichtung (42) zur Bearbeitung von biometrischen Daten bezogen auf einen biologischen Teil in einem biometrischen System, **dadurch gekennzeichnet, dass** die Vorrichtung zur Bearbeitung einerseits mindestens eine Einheit von biometrischen Referenzdaten ($B'_1$), die aus der Anwendung einer Operation "exklusives Oder" zwischen einer ersten Einheit von biometrischen Daten ($B_1$) und einem ersten kodierten Schlüssel ($K_1$) resultieren, und andererseits eine Information bezogen auf den ersten Schlüssel aufweist; dass die Vorrichtung aufweist:

   - eine Schnittstelleneinheit (421), die geeignet ist, um eine zweite Einheit von biometrischen Daten ($B_2$) zu empfangen;
   - eine Bestimmungseinheit (422), die geeignet ist, um einen zweiten kodierten Schlüssel ($K_2$) durch Anwendung einer Operation "exklusives Oder" zwischen der Einheit von biometrischen Referenzdaten und der zweiten Einheit von biometrischen Daten, die von der Schnittstelleneinheit empfangen wird, bereitzustellen;
   - eine Dekodiereinheit (425), die geeignet ist, um den zweiten kodierten Schlüssel ($K_2$) zu dekodieren; und
   - eine Entscheidungseinheit (423), die geeignet ist, um zu entscheiden, ob die zweite Einheit von biometrischen Daten der ersten Einheit von biometrischen Daten entspricht, durch Vergleich der Information bezogen auf den ersten Schlüssel mit dem zweiten Schlüssel;

   dass die erste und die zweite Einheit der biometrischen Daten in einem multidimensionalen Referentiell mit N Dimensionen beschrieben werden, wobei N eine ganze Zahl größer oder gleich 2 ist, und wobei die biometrischen Daten gemäß mindestens einer der N Dimensionen durch eine Vielzahl von Bearbeitungen, die bezogen auf den biologischen Teil angewandt wird, erhalten werden; und wobei der erste kodierte Schlüssel durch Anwendung einer Kodierung erhalten wird, die ein ursprüngliches Wort mit einer festgelegten Länge in ein kodiertes Wort in dem multidimensionalen Referentiell transformiert.

8. Vorrichtung (42) zur Bearbeitung von biometrischen Daten nach Anspruch 7, **dadurch gekennzeichnet, dass** die biometrischen Daten gemäß mindestens einer Dimension durch Aufnahme einer Vielzahl von Bildern des biologischen Teils erhalten werden.

9. Vorrichtung (42) zur Bearbeitung von biometrischen Daten nach Anspruch 7 oder 8, **dadurch gekennzeichnet, dass** die biometrischen Daten gemäß mindestens einer Dimension durch Anwendung einer Vielzahl von Filtern auf ein Bild des biologischen Teils erhalten werden.

10. Vorrichtung (42) zur Bearbeitung von biometrischen Daten nach einem beliebigen der Ansprüche 7 bis 9, **dadurch gekennzeichnet, dass** die Information bezogen auf den ersten Schlüssel durch Anwendung einer Hashfunktion auf den ersten Schlüssel erhalten wird; und dass die Entscheidungseinheit aufweist:

   - eine Hasheinheit (426), die geeignet ist, um die Hashfunktion auf den zweiten dekodierten Schlüssel anzuwenden;
   - eine Vergleichseinheit, die geeignet ist, um die Information bezogen auf den ersten Schlüssel mit dem zweiten Schlüssel in zerhackter Form zu vergleichen.

11. Vorrichtung (42) zur Bearbeitung von biometrischen Daten nach einem beliebigen der Ansprüche 7 bis 10, **dadurch gekennzeichnet, dass** die Einheit von biometrischen Referenzdaten (B'1) und / oder die Information bezogen auf den ersten Schlüssel in einer Datenbank (424) verfügbar sind.

12. Bearbeitungssystem von biometrischen Daten, das eine Vorrichtung zur Bearbeitung von biometrischen Daten nach einem beliebigen der Ansprüche 7 bis 11 und mindestens einen biometrischen Sensor (51) aufweist, der geeignet ist, um der Vorrichtung zur Bearbeitung von biometrischen Daten eine zweite Einheit von biometrischen Daten bereitzustellen.

$$B'_1 = B_1 + K_1$$

11

- - - - - - - - - - - - - - - -

CAPTER $B_2$ — 12

$$K_2 = B'_1 \oplus B_2$$ — 13

COMPARER
LES PREMIÈRE
ET SECONDE CLÉS — 14

**FIG. 1**

**FIG. 3**

FIG. 2

**FIG. 4**

**FIG. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 827284 A

**Littérature non-brevet citée dans la description**

- **G. D. FOMEY.** The Viterbi algorithm. *Proc. IEEE,* Mars 1973, vol. 61 (3), 268-278
- **J. DAUGMAN.** High confidence visual recognition of persons by a test of statistical independence. *IEEE Trans. Pattern Anal. Mach. Intell.,* 1993, vol. 15 (11), 1148-1161
- **J. DAUGMAN.** The importance of being random: statistical principles of iris recognition. *Pattern Recognition,* 2003, vol. 36 (2), 279-291
- **J. G. GAUGMAN.** Complete discrete 2D Gabor transforms by neural networks for image analysis and compression. *IEEE Trans. Acoustics ; Speech Signal Processing,* 1988, 36
- **K. JAIN ; S. PRABHAKAR ; L. HONG.** A Multichannel Approach to Fingerprint Classification. *IEEE Trans. Pattern Anal. and Machine Intell.,* 1999, vol. 21 (4), 348-359